Europäisches Patentamt

European Patent Office

Office européen des brevets

(19)

(11) Numéro de publication: **0 001 459**
A1

(12) **DEMANDE DE BREVET EUROPEEN**

(21) Numéro de dépôt: 78200175.4

(22) Date de dépôt: 07.09.78

(51) Int. Cl.²: **H 01 H 47/18, G 05 B 19/06,**
**H 01 H 43/10, G 04 F 3/06**

(30) Priorité: 07.10.77 FR 7730201

(43) Date de publication de la demande: 18.04.79
Bulletin 79/8

(84) Etats contractants désignés: BE CH DE GB NL SE

(71) Demandeur: BUI ANH TUAN, 15, rue Henri Cardinaud,
F-94000 Créteil (FR)

(72) Inventeur: BUI ANH TUAN, 15, rue Henri Cardinaud,
F-94000 Créteil (FR)

(74) Mandataire: Vander-Heym, Roger et al, 172 Boulevard
Voltaire, F-75011 Paris (FR)

(54) Perfectionnements aux dispositifs de commutation temporisée.

(57) Le moteur (1) de la minuterie et l'interrupteur (2) sont montés en série, le dispositif étant interposé entre la source électrique et l'appareil à alimenter. La première borne du moteur est reliée à une borne de la source selon deux circuits distincts: l'un comportant l'interrupteur (2) de la minuterie et un interrupteur manuel (3) tandis que l'autre comporte un interrupteur (7), ledit interrupteur (7) étant couplé mécaniquement avec un second interrupteur (8) reliant la seconde borne de la source à la seconde borne du moteur, la première borne (5a) d'utilisation étant reliée à ladite première borne du moteur tandis que la seconde borne (5b) d'utilisation est reliée directement à la seconde borne de la source.

0001459

-1-

## Perfectionnements aux dispositifs de commutation temporisée

La présente invention est relative à des perfectionnements aux dispositifs de commutation temporisée.

Il se pose souvent le problème de commander l'ouverture ou la fermeture d'un circuit électrique après un temps déterminé. A cet effet,on utilise des appareils denommés "minuteries". Dans sa forme la plus simple,une minuterie est constituée par un index mobile,à position réglable,entrainé par un moteur électrique,un contact susceptible d'être influencé par ledit index étant interposé en série dans le circuit à commander. Ainsi,par un réglage judicieux de l'index précité il est possible de fixer le moment d'ouverture ou de fermeture du circuit électrique de l'appareil.

Si avant le moment fixé,on ouvre l'interrupteur d'alimentation de l'appareil à commander,le moteur de la minuterie continue à tourner et l'index à ce déplacer.

Lorsqu'on désire alimenter un appareil électrique par intermittence et que ses utilisations successives ne doivent pas dépasser un temps prédéterminé,il n'est pas possible d'utiliser les minuteries du genre cité ci-dessus.

La présente invention concerne un dispositif permettant d'atteindre le résultat ci-dessus à l'aide d'une minuterie du genre précité.

Selon l'invention,ce résultat est obtenu en montant en série le moteur de la minuterie et son contact de commande.Un autre objet de l'invention consiste à réaliser un dispositif de commutation temporisé comportant des moyens permettant de suspendre dans le temps les effets de la minuterie.Selon l'invention,ce résultat est obtenu en interposant sur le circuit d'alimentation du moteur deux interrupteurs couplés dont l'un est situé entre une borne du moteur et une borne de la source et l'autre sur une dérivation partant de l'autre borne de la source pour aboutir en un point situé entre l'autre borne du moteur et l'interrupteur de la minuterie.Les deux interrupteurs sont couplés de façon à ce que l'un soit ouvert lorsque l'autre est fermé,le changement d'état de ceux ci résultant de la mise en place ou du retrait d'une clé car il importe que seule une personne autorisée puisse suspendre les effets de la minuterie.

Un tel dispositif est particulièrement intéressant pour commander l'alimentation d'un récepteur de télévision.Il permet, notamment,de limiter le temps durant lequel les enfants peuvent regarder les programmes tout en les laissant libres de choisir lesdits programmes à l'intérieur d'une tranche de temps qui leur est allouée par un réglage judicieux de la minuterie du dispositif.

L'invention sera mieux comprise par la description qui va suivre faite en se référant aux dessins annexés à titre d'exemple indicatif,seulement,sur lesquels:

La figure 1 est un diagramme montrant les avantages du dispositif de l'invention sur les minuteriesclassiques;
La figure 2 est un schéma électrique montrant le dispositif de l'invention en position de fonctionnement;
La figure 3 est une vue identique à celle 2 montrant la possibilité de suspendre les effets de la minuterie;

La figure 4 est une vue analogue à la figure 2 montrant une variante de réalisation.

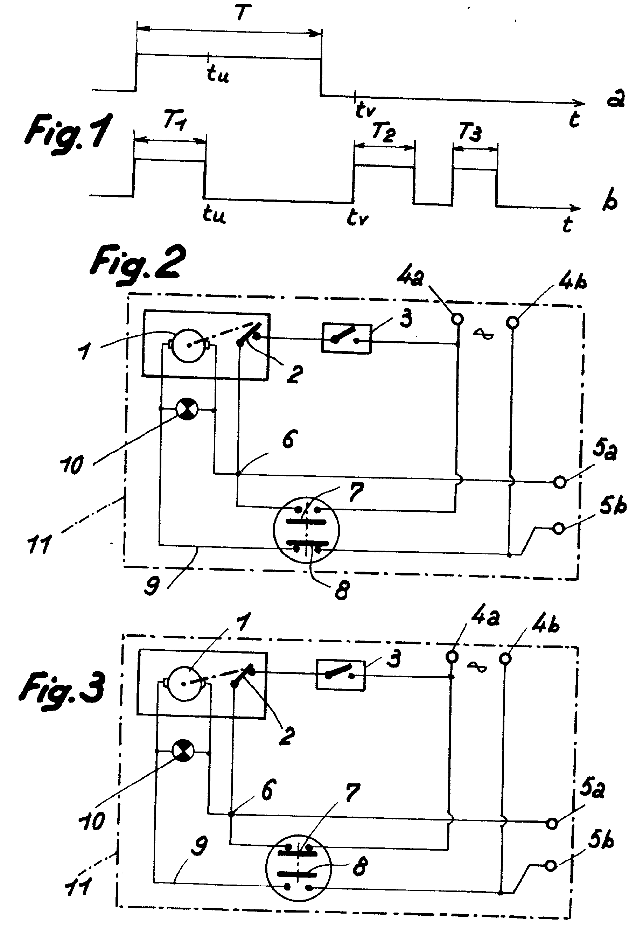

La figure 1a est le diagramme de la temporisation obtenue avec une minuteris classique alors que celle 1b montre la temporisation qui peut être obtenue par le dispositif de l'invention.Le temps T,déterminé par le réglage initial de l'index de la minuterie,est égal à la somme des temps $T_1$,$T_2$ et $T_3$.

Si on ouvre avec une minuterie classique à l'instant $t_u$ l'interrupteur d'alimentation de l'appareil que cette minuterie contrôle puis qu'on referme à l'instant $t_v$ on constate que le capital temps du dispositif classique est épuisé car le moteur de la minuterie a continué de fonctionner après l'instant $t_u$ alors que le moteur a été stoppé dans le cas du dispositif de l'invention.Un tel résultat est obtenu à l'aide du dispositif qui va être décrit ci-dessous.

Le moteur de la minuterie est désigné par 1,son interrupteur usuel par 2 et un interrupteur manuel par 3.Le dispositif de l'invention est interposé entre la source et l'appareil à alimenter tel qu'un récepteur de télévision par exemple.Les bornes $4_a$ et $4_b$ sont destinées à être reliées à la source électrique;celles $5_a$ et $5_b$,aux lignes d'alimentation de l'appareil en question.Une borne du moteur est reliée à la borne $4_a$ soit par l'interrupteur 2 et celui 3,soit par un circuit dérivé comportant un interrupteur 7 couplé avec un second interrupteur 8 interposé sur un conducteur 9 reliant la seconde borne du moteur à celle $4_b$.La borne $5_a$ est reliée à un point 6 commun à la première borne du moteur 1 et à l'interrupteur 2 tandis que celle $5_b$ est reliée à la borne $4_b$.Le dispositif est complété par une lampe témoin 10 connectée aux bornes du moteur 1 et est enfermé dans un coffret 11 dont la fermeture est commandée par une clé (non représentée) interdissant aux personnes non autorisées de modifier le réglage de l'index de la minuterie,d'agir sur l'interrupteur 2 ou d'avoir accès aux bornes $5_a$ et $5_b$.Le montage des deux interrupteurs 7 et 8 est tel que l'un est fermé quand l'autre est ouvert.De préférence, la commande de cet ensemble est effectué à l'aide d'une clé. Lorsque la clé est enlevée les interrupteurs 7 et 8 sont dans l'état représenté sur la figure 2 tandis qu'ils sont dans l'état représenté sur la figure 3 lorsque la clé est en place.

Dès lors,on comprend que dans le cas de la figure 2 le courant ne parviendra aux bornes $5_a$ et $5_b$ qu'à la condition que les deux interrupteurs 2 et 3 soient fermés.L'interrupteur 2 sera fermé si le "capital temps" déterminé par le réglage de la minuterie n'est pas épuisé.Si on ouvre l'interrupteur manuel 3 le moteur 1 n'est plus alimenté et les effets de la minuterie sont suspendus tant que ledit interrupteur sera ouvert(ce qui correspond sur le diagramme de la figure 1b au temps compris entre $t_u$ et $t_v$).L'interrupteur 3 permet donc de fractionner le capital temps enregistré dans la minuterie.Lorsque l'interrupteur 8 est fermé et que celui 7 est ouvert l'appareil d'utilisation est branché sur la minuterie.Lorsque l'interrupteur 7 est fermé et que celui 8 est ouvert cela permet d'alimenter l'appareil sans passer par la minuterie qui conserve le capital temps encore disponible à l'instant de l'intervention.

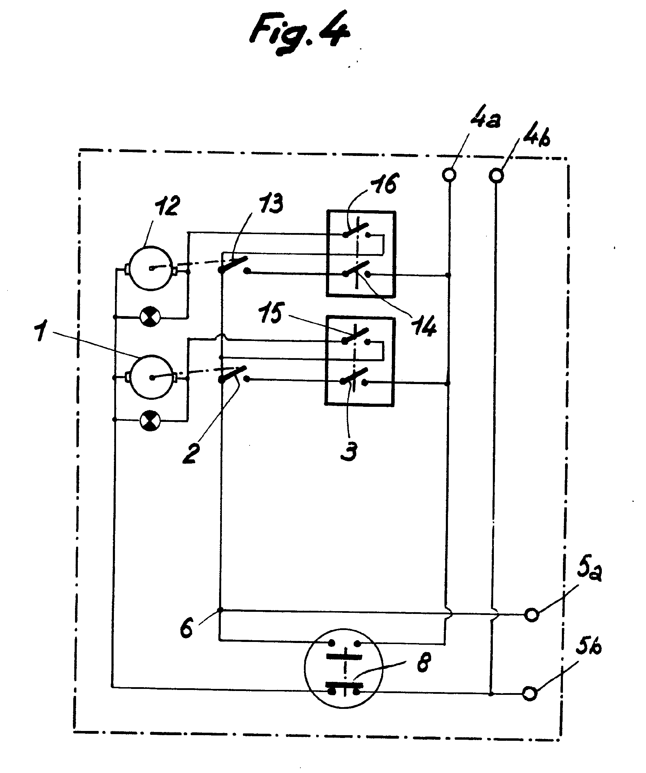

La figure 4 montre la possibilité de réaliser un dispositif comportant deux minuterie et pouvant être employé par deux utilisateur différents,chacun de ceux-ci disposant alors en propre d'un capital temps indépendant.Ce résultat est obtenu en montant le moteur 12 de la seconde minuterie,son interrupteur 13 et l'interrupteur manuel 14 analogue à celui 3 selon les mêmes principes que ceux exposés ci-dessus mais en interposant un nouvel interrupteur manuel,respectivement 15-16,entre la première borne de chacun des moteurs 1-12 et le point 6 commun aux interrupteurs 2-13 et à la borne $5_a$.Les interrupteurs 3 et 15,ainsi que ceux 14 et 16 sont couplés mécaniquement,de manière à s'ouvrir ou à se fermer simultanément.D'une façon générale la commande de chacune de ces paires d'interrupteurs manuels est effectuée à l'aide d'une clé.

La présente invention s'étend à toutes variantes à la portée de

-5-

l'homme de l'art et couvre,d'une façon générale,un dispositif dont une borne d'utilisation est reliée à une borne de la source selon deux circuits distincts,l'un comportant les interrupteurs 2 et 3 et l'autre l'interrupteur 7 couplé avec celui 8 qui commande la mise sous tension du moteur 1 lorsqu'une tension est présente aux bornes d'utilisation auxquelles est branché ledit moteur.

Revendications

1-Perfectionnements aux dispositifs de commutation temporisée du genre de ceux comportant une minuterie pourvue d'un moteur électrique susceptible de commander un interrupteur monté en série,caractérisés en ce que le dispositif est interposé entre la source électrique et l'appareil à alimenter et en ce que la première borne du moteur est reliée à une borne de la source selon deux circuits distincts:l'un comportant l'interrupteur 2 de la minuterie et un interrupteur manuel 3 tandis que l'autre comporte un interrupteur 7,ledit interrupteur 7 étant couplé avec un second interrupteur 8 reliant la seconde borne de la source à la seconde borne du moteur,la première borne $5_a$ d'utilisation étant reliée à ladite première borne du moteur tandis que la seconde borne $5_b$ d'utilisation,est reliée directement à la seconde borne de la source.

2-Perfectionnements aux dispositifs de commutationtemporisée selon la revendication 1,caractérisée en ce que les deux interrupteurs 7 et 8 sont couplés de façon telle que l'un est fermé lorsque l'autre est ouvert.

3-Perfectionnements aux dispositifs de commutation temporisée selon la revendication 2,caractérisés en ce que les deux interrupteurs 7 et 8 sont couplés mécaniquement.

4-Perfectionnements aux dispositifs de commutation temporisée selon la revendication 3,caractérisé en ce que la manoeuvre des deux interrupteurs couplés est commandée par une clé.

5-Perfectionnements aux dispositifs de commutation temporisée selon l'une quelconque des revendications 1 à 4,caractérisés en ce que le dispositif est enfermé dans un coffret permettant aux personnes non autorisées,seulement de manoeuvrer un interrupteur manuel 3 monté en série avec l'interrupteur de la minuterie.

6-Perfectionnements aux dispositifs de commutation temporisée selon l'une des revendications 1 à 5,caractérisée en ce qu'on utilise plusieurs minuteries,le moteur et l'interrupteur de chaque minuterie ainsi que l'interrupteur manuel correspondant étant montés selon les mêmes principes,mais qu'on interpose un second interrupteur manuel entre la première borne de chacun des moteurs et le points commun aux interrupteurs des minuteries et à la borne d'utilisation $5_a$.

7-Perfectionnements aux dispositifs de commutation temporisée selon la revendication 6,caractérisés en ce que les deux interrupteurs manuels correspondant à chacune des minuteries sont couplés de façon à être fermés ou ouvert simultanément.

8-Perfectionnements aux dispositifs de commutation temporisée selon la revendication 7,caratérisés en ce que les interrupteurs manuels sont couplés mécaniquement.

9-Perfectionnements aux dispositifs de commutation temporisée selon la revendication 8,caractérisés en ce que les paires d'interrupteurs manuels couplés sont commandés par des clés.

0001459

**Fig.1**

**Fig.2**

**Fig.3**

**Fig.4**

## DOCUMENTS CONSIDERES COMME PERTINENTS

| Catégorie | Citation du document avec indication, en cas de besoin, des parties pertinentes | Revendication concernée |
|---|---|---|
| | FR - A - 2 040 995 (DAUZIER) <br> * Page 2, lignes 1 à 22; figure 1 * <br> --- | 1 |
| | US - A - 3 046 421 (HOLZER) <br> * Colonne 2, lignes 28 à 65 * <br> --- | 1 |
| A | FR - A - 2 319 966 (NICOLAS) | 1 |
| A | DE - A - 1 964 352 (ANSCHUETZ) <br> ----- | 1 |

**CLASSEMENT DE LA DEMANDE (Int. Cl.²)**

H 01 H 47/18
G 05 B 19/06
H 01 H 43/10
G 04 F 3/06

**DOMAINES TECHNIQUES RECHERCHES (Int. Cl.²)**

H 01 H 47/18
G 05 B 19/06
H 01 H 43/10
G 04 F 3/06

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-01-1979 | BERTIN |

OEB Form 1503.1 06.78